**Europäisches Patentamt**

**European Patent Office**

**Office européen des brevets**

(19)

(11) Veröffentlichungsnummer: **0 324 463 B1**

# EUROPÄISCHE PATENTSCHRIFT

(12)

(45) Veröffentlichungstag der Patentschrift:
27.02.91 Patentblatt 91/09

(51) Int. Cl.⁵: **F16L 55/18, F16L 55/16**

(21) Anmeldenummer: **89100457.4**

(22) Anmeldetag: **12.01.89**

(54) **Rohraufweitungsgerät.**

(30) Priorität: **14.01.88 DE 3800869**

(43) Veröffentlichungstag der Anmeldung:
**19.07.89 Patentblatt 89/29**

(45) Bekanntmachung des Hinweises auf die
Patenterteilung:
**27.02.91 Patentblatt 91/09**

(84) Benannte Vertragsstaaten:
**AT BE CH DE ES FR GB IT LI NL SE**

(56) Entgegenhaltungen:
**EP-A- 0 053 480**
**EP-A- 0 190 933**
**EP-A- 0 216 100**
**GB-A- 2 139 938**

(73) Patentinhaber: **Hans Brochier GmbH & Co**
**Martha Strasse 16**
**D-8500 Nürnberg (DE)**

(72) Erfinder: **Zimmermann, Heinz**
**Im Harl 12**
**D-8133 Feldafing (DE)**

(74) Vertreter: **Patentanwälte Czowalla. Matschkur**
**& Partner**
**Dr.-Kurt-Schumacher-Strasse 23 Postfach**
**9109**
**D-8500 Nürnberg 11 (DE)**

**Beschreibung**

Die Erfindung bezieht sich auf ein Rohraufweitungsgerät zum Aufbrechen und Verdrücken alter Metallrohre ins umgebende Erdreich in Form eines durch das Altrohr zu ziehenden, mit einer konischen Spitze und wenigstens einer Schneide versehenen zylindrischen Bodenverdrängungshammers mit vibrierend schlagendem Meißelkopf und einer rückwärtigen Halterungsvorrichtung für einzuziehendes Schutzrohr oder neues Versorgungsrohr. Ein solches Gerät ist z.B. aus EP-A-0053480 bekannt.

Derartige Rohraufweitungsgeräte zum grabenlosen Verlegen von Versorgungsleitungen werden in jüngster Zeit zunehmend eingesetzt, insbesondere weil durch die Vermeidung des Aushebens von Gräben der Verkehr weit weniger behindert wird als durch die herkömmliche Verlegung in offenen Gräben. Eine der Hauptschwierigkeiten bei diesem grabenlosen Verlegen besteht dabei in der Gefahr, daß sehr harte Altrohre durch die Schneiden des Bodenverdrängungshammers nicht aufgebrochen werden können, was vornehmlich im Bereich von Muffen oder sonstigen Endflanschen der einzelnen Rohrabschnitte zu befürchten ist, in dem eine doppelte oder gar mehrfache Wandstärke auftritt. Der Zug über das an der Spitze angehängte Seil ist dabei für den Vortrieb des Bodenverdrängungshammers nur unbedeutend. Die Hauptkraft ergibt sich durch das vibrierende Schlagen des Meißelkopfes, wobei die Reibung des zylindrischen Körpers des Bodenverdrängungshammers im ins Erdreich verdrückten zerbrochenen Altrohr die Hauptgegenkraft darstellt. Ist beispielsweise eine Rohrmuffe zu stark, so kann es passieren, daß diese Reibungskraft nicht ausreicht, um den Bodenverdrängungshammer soweit zu haltern, daß die Schlagkraft des vibrierenden Meißelkopfs auch tatsächlich zum Aufbrechen des Rohres an dieser verstärkten Stelle führt.

Der Erfindung liegt daher die Aufgabe zugrunde, ein Rohraufweitungsgerät der eingangs genannten Art so auszugestalten, daß eine verbesserte Halterung des Bodenverdrängungshammers und daraus resultierend eine erhöhte Aufbrechkraft der schneidenbesetzten Spitze gewährleistet ist.

Zur Lösung dieser Aufgabe ist erfindungsgemäß vorgesehen, daß einem Messer mit zur Längsachse der konischen Spitze geneigter Schneide eine zur Längsachse im wesentlichen parallele Abstützfläche gegenüberliegt, die am hinteren Ende in eine kurze Aufreißschneide übergeht.

Im Gegensatz zu herkömmlichen Rohraufweitungsgeräte, bei denen meist mehr als zwei, mindestens aber zwei, symmetrische Messerschneiden vorgesehen waren, geht die vorliegende Erfindung von der durch umfangreiche Versuche gewonnen Erkenntnis aus, daß gerade der Versuch des gleichzeitigen Aufbrechens des Rohrs an zwei oder mehreren Stellen die vorstehend skizzierten Probleme zum großen Teil mit verursacht. Bereits bei zwei symmetrischen, einander gegenüberstehenden Schneiden ergibt sich nicht nur die Schwierigkeit, daß nur die Hälfte der Kraft zum Aufbrechen des Rohrs jeweils an einer Schneide zur Verfügung steht, sondern insbesondere entsteht ein Keileffekt, der quasi wie ein selbsthemmender Keil ein weiteres Vordringen des Bodenverdrängungshammers ausschließt. Durch die erfindungsgemäße im wesentlichen parallel zur Längsachse des Bodenverdrängungshammers verlaufende Abstützfläche kann die Kraft vollständig zum Aufbrechen des Rohrs an einer einzigen Stelle eingesetzt werden. Die zur Achse parallele Abstützfläche verhindert eine Selbsthemmung eines zu großen Keilwinkels und ergibt auf der anderen Seite eine erhöhte Reibungskraft, die ein zu starkes Zurückfedern des vibrierenden Meißelkopfs verhindert und damit seine Aufbrechkraft erst richtig zur Geltung bringt.

Da in den weitaus meisten Fällen ein vollständiges Verdrängen des Altrohrs ins Erdreich bei einseitig aufgebrochenem Rohr nicht in befriedigendem Maß möglich ist, ist vorgesehen, daß die Abstützfläche am hinteren Ende in eine kurze Aufreißschneide übergeht, die somit das bereits einseitig aufgerissene Rohr auch auf der Gegenseite aufreißt, so daß zumindest zwei Halbrohre zur Verfügung stehen, die sich wesentlich besser nach außen verdrängen lassen. Das Aufreißen durch die verkürzte nach rückwärts versetzte Aufreißschneide ist dabei im Hinblick auf das bereits ja einseitig aufgerissene Rohr wesentlich einfacher und mit geringerem Kraftaufwand möglich, gerade weil durch die Voraufweitung der häufig aus Gußeisen bestehenden Rohre auch auf der der ersten Aufreißnaht gegenüberliegenden Seite bereite ein Bruch aufgetreten oder zumindest in der Struktur angedeutet ist.

Eine besonders einfache und wirkungsvolle Konstruktion eines erfindungsgemäßen Rohraufweitungsgeräts erhält man, wenn, wie in Ausgestaltung der Erfindung vogesehen ist, eine nach vorne über die konische Spitze überstehende Messerplatte vorgesehen ist, die sowohl die Schneiden, als auch eine Abstützkante bildet.

Weitere Vorteile, Merkmale und Einzelheiten der Erfindung ergeben sich aus der nachfolgenden Beschreibung eines Ausführungsbeispiels sowie anhand der Zeichnung. Dabei zeigen :

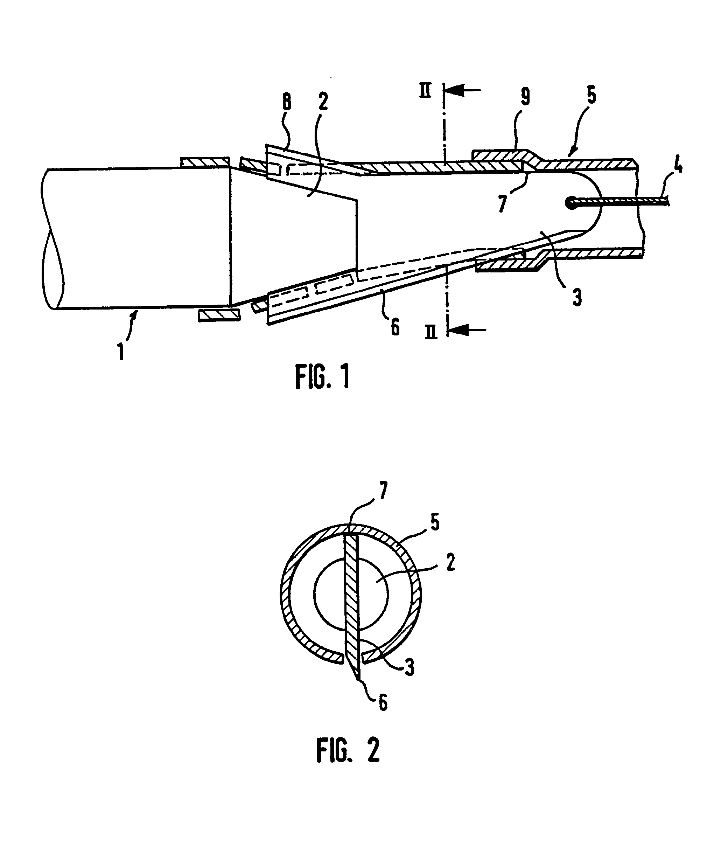

Fig. 1 eine schematische Darstellung des Kopfes des Bodenverdrängungshammers eines erfindungsgemäßen Rohraufweitungsgeräts im Bereich einer Muffenverbindung des aufzubrechenden Altrohrs, und

Fig. 2 einen Schnitt längs der Linie II-II in Fig. 1.

Der zylindrische Bodenverdrängungshammer 1 ist mit einer konischen Spitze 2 versehen, auf die eine Messerplatte 3 aufgeschweißt ist, die ihrerseits mit einem Zugseil 4 verbunden ist, welches von einer Baugrube aus den Bodenverdrängungshammer, der durch eine beabstandete Baugrube eingesetzt worden ist, durch das Altrohr 5 hindurchzieht. Im Innern des zylindrischen Bodenverdrängungshammers 1 ist eine vibrierende Schlageinrichtung vorgesehen, die über Preßluftversorgungsleitungen am rückwärtigen Ende mit einer im Bereich der hinteren Baugrube angeordneten Preßluftquelle verbunden ist. Darüber hinaus ist am hinteren Ende des Bodenverdrängungshammers 1 entweder ein Schutzroh für ein später einzuziehendes neues Versorgungsrohr oder unmittelbar das neue Versorgungsrohr selbst angehängt. Erfindungsgemäß ist die Messerplatte 3 so ausgebildet, daß sie auf einer Seite eine geneigte Schneide 6 aufweist, während ihr gegenüberliegend eine schneidenfreie, im wesentlichen parallel zur Längsachse des Bodenverdrängungshammers und damit auch des Altrohrs verlaufende Abstützkante 7 vorgesehen ist. Diese geht erst am hinteren Ende in eine kurze Aufreißschneide 8 über. Durch diese Ausbildung wird erreicht, daß insbesondere im Bereich von besonderen Verstärkungen des Altrohrs, wie der vorstehend angedeutet Muffe 9, bei der ja praktisch die doppelte Wandstärke eines Altrohrs aufgebrochen werden muß, zunächst nur einseitig ein Aufbrechen erreicht werden muß und nicht, wie bei den bisherigen Bodenverdrängungshämmern, ein gleichzeitiges Aufreißen auf zwei oder gar noch mehr am Umfang versetzten Kanten. Die Abstützkante 7, die ja quasi parallel zur Innenwandung des Altrohrs 5 verläuft, gewährleistet, daß die Vordrängbewegung des vibrierenden Meißelkopfs als Aufbrechkraft lediglich auf der in der Zeichnung untenliegenden Schneide 6 auf das Altrohr einwirkt, so daß dieses sehr viel wirkungsvoller aufgebrochen werden kann. Dabei ist zu beachten, daß zwar die nachlaufende Aufreißschneide 8 an der Oberseite der Messerplatte 3 zum gleichen Zeitpunkt ebenfalls das Rohr aufreißt, dies jedoch an einer versetzten Stelle, an der durch das vorherige Aufbrechen zum einen bereits eine Materialschwächung, wenn nicht gar ein völliges Aufbrechen stattgefunden hat, und vor allen Dingen an einer Stelle, an der nicht ebenfalls eine Verstärkung, wie die gezeigte Muffe 9, vorhanden ist.

Die Erfindung ist nicht auf das dargestellte Ausführungsbeispiel beschränkt. So wäre es beispielsweise auch möglich, daß die Messer 6, 8 als getrennte Bauteile auf einen Bodenverdrängungshammer aufgebracht werden, der nach vorne an den konischen Teil anschließend noch eine zylindrische Spitze aufweist. Entscheidend ist, daß einer Schneide 6 eine Abstützfläche 7 gegenüberliegt und die an deren hinterem Ende angeordnete Aufreißschneide so versetzt ist, daß beim Arbeiten nicht gleichzeitig an zwei einander gegenüberliegenden Seiten aufgebrochen wird und somit das gleichzeitige zweifache Aufbrechen von Verstärkungen des aufzubrechenden Altrohrs vermieden ist.

## Claims

1. Rohraufweitungsgerät zum Aufbrechen und Verdrücken alter Metallrohre ins umgebende Erdreich in Form eines durch das Altrohr zu ziehenden, mit einer konischen Spitze und wenigstens einer Schneide versehenen zylindrischen Bodenverdrängungshammers mit vibrierend schlagendem Meißelkopf und einer rückwärtigen Halterungsvorrichtung für ein einzuziehendes Schutzrohr oder neues Versorgungsrohr, dadurch gekennzeichnet, daß einem Messer mit zur Längsachse der konischen Spitze (2) geneigter Schneide (6) eine zur Längsachse im wesentlichen parallele Abstützfläche (7) gegenüberliegt, die am hinteren Ende in eine kurze Aufreißschneide (8) übergeht.

2. Rohraufweitungsgerät nach Anspruch 1, dadurch gekennzeichnet, daß eine nach vorne über die konische Spitze (2) überstehende Messerplatte (3) vorgesehen ist, die sowohl die Schneiden (6, 8) als auch eine Abstützkante (7) bildet.

## Claims

1. Pipe-expanding device for opening and crushing old metal pipes into the surrounding earth, having the form of a cylindrical base displacement hammer to be pulled through the old pipe and having a conical tip and at least one cutting edge, with a vibrating percussive chisel head and a rear holding device for a protective pipe to be inserted or new supply pipe, characterised that a bearing face (7) substantially parallel to the longitudinal axis lies opposite a blade with a cutting edge (6) inclined relative to the longitudinal axis of the conical tip (2) and is integral with a short tearing cutting edge (8) at the rear end.

2. Pipe-expanding device according to claim 1, characterised in that a blade plate (3) projecting forwards beyond the conical tip (2) is provided, and forms both the cutting edges (6, 8) and a bearing edge (7).

## Revendications

1. Appareil d'élargissement de tuyaux destiné à rompre de vieux tuyaux métalliques et à les écraser en les repoussant dans la terre environnante, et se présentant sous la forme d'un marteau cylindrique de refoulement du sol, à tirer au travers de l'ancien tuyau, muni d'une pointe conique et d'au moins un outil tranchant, et comportant une tête de frappe à percussion par vibration, ainsi qu'un dispositif de maintien, arière, pour un tuyau formant gaine de protection ou un nouveau tuyau d'alimentation devant être introduit, caractérisé en ce qu'à une lame de coupe avec un tranchant (6) incliné par rapport à l'axe longitudinal de la pointe conique (2), est opposée une surface d'appui (7) sensiblement parallèle à l'axe longitudinal et se transformant, à l'extrémité arrière, en un court tranchant d'éclatement (8).

2. Appareil d'élargissement de tuyaux selon la revendication 1, caractérisé en ce qu'il est prévu une lame de coupe en forme de plaque (3) qui s'étend vers l'avant, en saillie de la pointe conique (2), et qui constitue aussi bien les tranchants (6, 8) qu'un bord d'appui (7).

FIG. 1

FIG. 2